# EUROPEAN PATENT APPLICATION

(11) **EP 4 852 516 A1**
(43) Date of publication of application: **09.12.2026**
(21) Application number: 24920919.8
(22) Date of filing: 31.01.2024
(51) Int. Cl.: H04W 36/00

(54) **AUTONOMOUS ACTION METHOD AND APPARATUS BASED ON TERMINAL EVALUATION**

(71) Applicant: 1FINITY INC., Kawasaki-shi, Kanagawa 211-8588 (JP)
(72) Inventor: JIA, Meiyi, Beijing 100022 (CN); LI, Guorong, Beijing 100022 (CN); ZHANG, Lei, Beijing 100022 (CN)
(74) Representative: Haseltine Lake Kempner LLP
(86) International application number: PCT/CN2024/075078
(87) International publication number: WO 2025/160852

(57) **Abstract**

Embodiments of the present disclosure provide a method and an apparatus for autonomous action based on terminal evaluation, the method comprising that a terminal equipment receives a first configuration transmitted by a network device, the first configuration being related to a first condition based on L1 measurement or L3 measurement; and the terminal equipment performs at least one of the following processes in a case where the first condition is satisfied: L1 measurement reporting, early uplink synchronization on a candidate cell, or LTM execution to a target cell. According to embodiments of the present disclosure, in a case where a condition (the first condition) based on L1 measurement or L3 measurement is satisfied, the terminal equipment performs at least one of L1 measurement reporting, early uplink synchronization on a candidate cell, or LTM execution to a target cell, thereby autonomous action is achieved, and signaling overhead is saved.

## Description

### TECHNICAL FIELD

Embodiments of the present disclosure relate to the technical field of communications.

### BACKGROUND

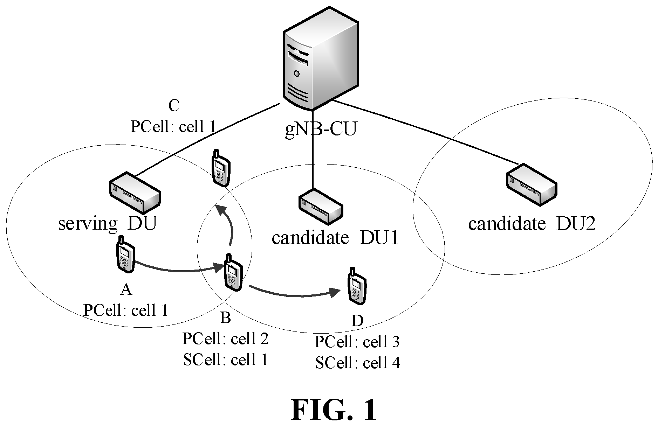

Network-controlled mobility applies to terminals in a connected state, and is categorized into two types of mobility: cell-level mobility and beam-level mobility. FIG. 1 is a schematic diagram of an inter-cell mobility scenario. As shown in FIG. 1, when a terminal moves from a coverage area of a cell to another cell, a serving cell change needs to be performed at some point.

Currently, cell-level mobility requires explicit Radio Resource Control (RRC) signaling to be triggered, i.e., handover. A serving cell change is triggered by L3 measurement, and is done by RRC signaling triggered Reconfiguration with Synchronisation for change of primary cell (PCell) and primary secondary cell (PSCell), as well as release add for secondary cells (SCells) when applicable. A handover mechanism triggered by RRC requires a UE (called a terminal equipment, a user equipment, a terminal, a user, etc.) at least to reset a Media Access Control (MAC) entity and re-establish Radio Link Control (RLC). RRC-managed handover with or without a Packet Data Convergence Protocol (PDCP) entity re-establishment are both supported. For example, for data radio bearers (DRBs) using an RLC acknowledged mode (RLC AM), a PDCP may either be re-established together with a security key change or initiate a data recovery procedure without a key change. For DRBs using an RLC unacknowledged mode (RLC UM), a PDCP may either be re-established together with a security key change or remain as it is without a key change. For signaling radio bearers (SRBs), a PDCP may either remain as it is, discard its stored PDCP packet data units (PDUs) /service data units (SDUs) without a key change or be re-established together with a security key change.

As described above, for an RRC-triggered handover mechanism, all cases involve complete L2 (and L1) resets, leading to longer latency, larger overhead, and longer interruption time than beam switch mobility. A goal of L1/L2 Triggered Mobility (LTM) enhancements is to enable a serving cell change via L1/L2 signaling, in order to reduce latency, overhead, and interruption time.

The foregoing is network-triggered cell switch. In addition, for a UE in an RRC connected state (RRC_CONNECTED state), cell switch may be initiated by a terminal. Terminal-initiated cell switch or terminal-triggered mobility at least includes: conditional reconfiguration, and recovery of a Radio Link Failure (RLF) or a handover failure on a Master Cell Group (MCG). The conditional reconfiguration includes Conditional Handover (CHO) and Conditional PSCell Addition/Change (CPAC).

For the conditional reconfiguration:
a network configures a terminal with one or more candidate target special cells (SpCells) in the conditional reconfiguration. The terminal evaluates a condition of each configured candidate target special cell. The terminal applies conditional reconfiguration associated with one of target cells which fulfils associated execution condition.

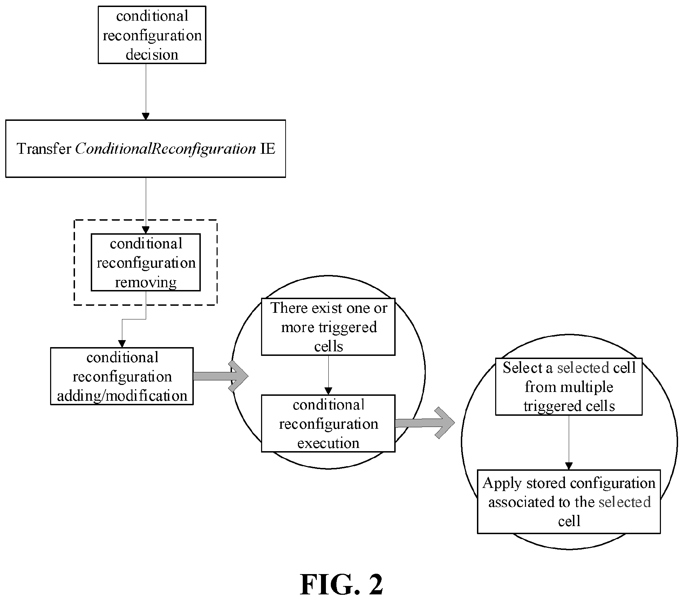

FIG. 2 is a schematic diagram of a UE behavior for conditional reconfiguration.

As shown in FIG. 2, based on a received *ConditionalReconfiguration* IE, the UE performs the following behaviors:
If the *ConditionalReconfiguration* includes *condReconfigToRemoveList:* performing a conditional reconfiguration removal procedure; and
if the *ConditionalReconfiguration* includes *condReconfigToAddModList:* performing conditional reconfiguration addition/modification.

The conditional reconfiguration addition/modification includes:
for each *condReconfigId* received in the *condReconfigToAddModList,* the UE will:
if an entry matching the *condReconfigld* exists in the *condReconfigToAddModList* within *VarConditionalReconfig:*
if this entry in the *condReconfigToAddModList* includes *condExecutionCond, condExecutionCondSCG,* or *condExecutionCondPSCell:* replace this entry with a value received for this *condReconfigId*;
if this entry in the *condReconfigToAddModList* includes *condRRCReconfig:* replace this entry with a value received for this *condReconfigld;*
otherwise, add a new entry in the *VarConditionalReconfig* for this *condReconfigId;* perform conditional reconfiguration evaluation.

The conditional reconfiguration evaluation includes:
the UE will:
for each *condReconfigId* within the *VarConditionalReconfig:*
consider a cell which has a Physical Cell Identity (PCI) matching a value indicated in *ServingCellConfigCommon* included in *reconfiguration WithSync* within received *condRRCReconfig* to be applicable cell;
for each *measId* in *measldList* within *VarMeasConfig* indicated in *condExecutionCond* of the *condReconfigId:*
   if an entering condition applicable for this event associated with the *condReconfigId,* i.e., an event corresponding with *condEventId(s)* of corresponding *condTriggerConfig* within *VarConditionalReconfig,* is fulfilled for an applicable cell for all measurements after layer 3 filtering taken during a corresponding *timeToTrigger* defined for this event within *VarConditionalReconfig:* consider the event associated with *measId* to be fulfilled;
   if a leaving condition applicable for the event associated with the *condReconfigId,* i.e., an event corresponding with *condEventId(s)* of corresponding *condTriggerConfig* within *VarConditionalReconfig,* is fulfilled for an applicable cell for all measurements after layer3 filtering taken, during a corresponding *timeToTrigger* defined for this event within *VarConditionalReconfig:* consider the event associated to that *measId* is not fulfilled;
   if events associated to all *measId(s)* within *condTriggerConfig* for a target candidate cell within stored *condRRCReconfig* are fulfilled:
      consider the target candidate cell within the stored *condRRCReconfig,* associated to that *condReconfigId* as a triggered cell;
      initiate conditional reconfiguration execution.

The conditional reconfiguration execution includes:
the UE will:
if more than one triggered cell exists: select the triggered cell as a selected cell for conditional reconfiguration execution;
for the selected cell of conditional reconfiguration execution, apply stored *condRRCReconfig* of the selected cell.

A network provides configuration parameters for a target special cell in a *ConditionalReconfiguration* IE. In dual connectivity (NR-DC), a UE may receive two independent *conditionalReconfiguration*: a *conditionalReconfiguration* associated with a Master Cell Group (MCG), which is included in an *RRCReconfiguration* message received via SRB1; and a *conditionalReconfiguration* associated with a Secondary Cell Group (SCG), which is included in an *RRCReconfiguration* message received via SRB3 or included within a *RRCReconfiguration* message embedded in a *RRCReconfiguration* message received via SRB1. In this case, the UE maintains two independent *VarConditionalReconfig*, each *conditionalReconfiguration* is associated with a *VarConditionalReconfig*; unless explicitly stated otherwise, the UE independently performs all the above procedures for each *conditionalReconfiguration* and associated *VarConditionalReconfig*. For *VarConditionalReconfig* associated with the same cell group, the UE performs a measurement procedure.

In addition, as described above, the conditional reconfiguration includes two cases, i.e., Conditional Handover (CHO) and conditional PSCell change. The conditional handover is defined as a handover that is executed by a UE when one or more handover execution conditions are met. The UE starts evaluating the execution condition(s) upon receiving a CHO configuration, and stops evaluating the execution condition(s) once handover is executed.

The following principles apply to CHO:
The CHO configuration includes a configuration of CHO candidate cell(s) generated by candidate gNB(s), and execution condition(s) generated by a source gNB; and
an execution condition may include one or two triggering condition(s) (CHO event A3/A5). Only a single Reference Signal (RS) type is supported and at most two different triggering quantities (e.g., Reference Signal Received Power (RSRP) and Reference Signal Received Quality (RSRQ), RSRP and Signal to Interference plus Noise Ratio (SINR), etc.) can be configured simultaneously for the evaluation of CHO execution condition of a single candidate cell;
before any CHO execution condition is satisfied, when a handover (HO) command (without a CHO configuration) is received, the UE executes a HO procedure, regardless of any previously received CHO configuration; and
while executing CHO, i.e., from the time when the UE starts synchronization with a target cell, the UE does not monitor a source cell.

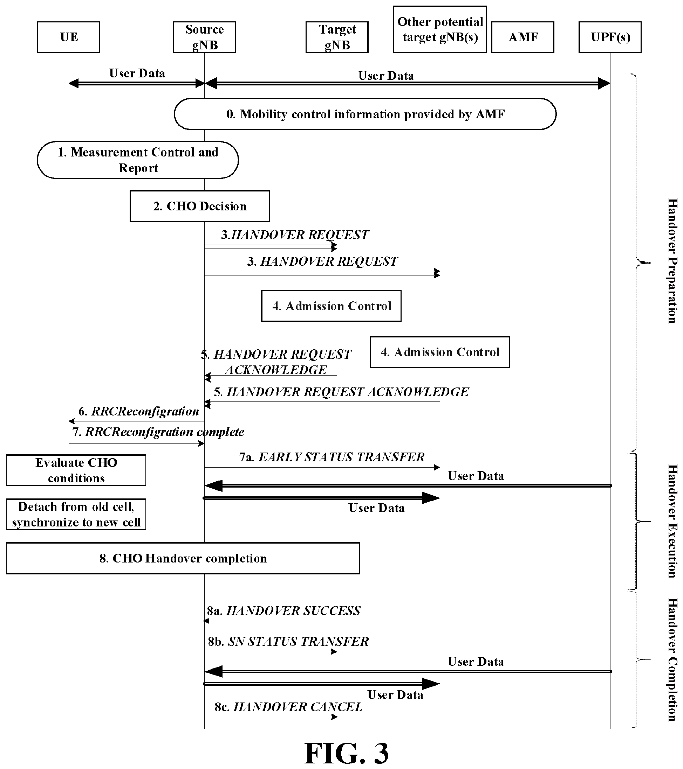

A CHO procedure within an Access and Mobility Management Function (AMF) is shown in FIG. 3, a specific procedure may be referred to related arts and is not elaborated here.

On the other hand, L3-based mobility has evolved over several releases, Conditional Handover (CHO) and other conditional mobility procedures (CPAC, SCPAC) were developed to achieve high robustness by enabling the procedures to be executed without necessitating a signaling exchange with a source cell beforehand. LTM as introduced in release 18 (Rel-18) offers short interruption time, but not with the same level of robustness as an L3-based mobility procedure. In release 19 (Rel-19), enhancements may be specified so that a system is able to benefit from both high robustness and short interruption.

In Rel-19, objectives of a work item include: specifying support for inter-CU L1/L2 triggered mobility (LTM), measurements related enhancements for purpose of supporting LTM, specifying support of conditional LTM, and, specifying Radio Resource Management (RRM) requirements related to the above objectives as necessary.

In the above objectives, the specifying support for inter-CU L1/L2 triggered mobility (LTM) includes:
prioritizing a case when a Central Unit (CU) is acting as a Master Node (MN) when Dual Connectivity (DC) is not configured;
as a secondary priority, supporting a case when NR-DC is configured, a CU is acting as a Secondary Node (SN), and an MN is unchanged;
as a secondary priority, supporting a case when NR-DC is configured, a CU is acting as an MN, and a Secondary Cell Group (SCG) is unchanged or is released; note: a case that LTM is configured in both a Master Cell Group (MCG) and an SCG is excluded;
according to Rel-18 LTM, specifying support for subsequent LTM mobility procedures aiming to avoid an Radio Resource Control (RRC) configuration between cell switches; and coordination with SA3 needed with respect to security key handling.

In the above objectives, it is worth noting that the Rel-18 intra-CU LTM procedure is considered as a baseline for adding inter-CU support.

In the above objectives, the measurements related enhancements for purpose of supporting LTM include:
the measurements related enhancements apply to intra-CU MCG/SCG LTM and inter-CU MCG/SCG LTM;
specifying necessary constituents to support event-triggered L1 measurement reporting; wherein, RAN1 and RAN2 independently advance event-triggered measurement objectives within their respective MIMO and mobility enhancement WIs; reviewing progress at RAN #105 to see whether objectives need to be modified to avoid/manage any duplicated work; and
specifying support for CSI-RS measurements of LTM procedures and ensuring CSI-RS-based beam management and/or necessary physical layer operations on other LTM candidate cells.

In the above objectives, the specifying support of conditional LTM includes:
specifying UE evaluated condition(s) for triggering LTM;
aiming to support conditional LTM including subsequent LTM;
prioritizing intra-CU LTM; and
a checkpoint to review objective at RAN#105. Before this checkpoint, RAN WG work does not start.

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

LTM is a procedure in which a gNB (also called a base station, a network device, a network, etc.) receives L1 measurement report(s) from a UE, and on their basis the gNB may change UE serving cell by a cell switch command signalled via a MAC Control Element (MAC CE). A MAC-triggered cell switch mechanism (i.e., LTM cell switch) requires a UE to at least reset a MAC entity. RLC processing depends on a network configuration.

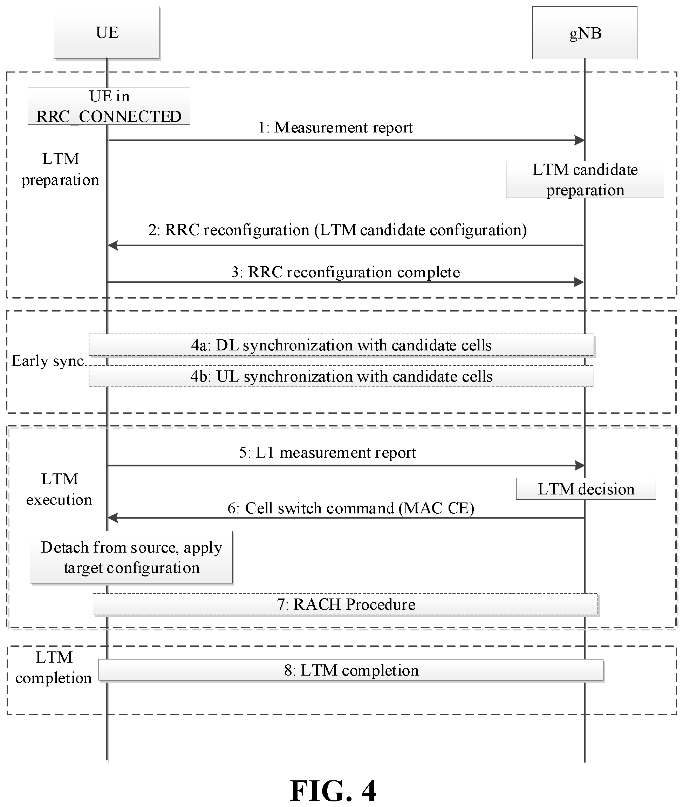

FIG. 4 is a schematic diagram of an overall procedure of LTM. A basic procedure on an air interface is applicable to MCG LTM or SCG LTM. As shown in FIG. 4, the procedure includes the following steps:
1. A UE transmits a *MeasurementReport* message to a gNB, wherein a gNB-CU decides to configure LTM and initiates LTM preparation;
2. The gNB transmits a *RRCReconfiguration* message including an LTM candidate configuration to the UE;
3. The UE stores the LTM candidate configuration and transmits an *RRCReconfigurationComplete* message to the gNB;
4a. Before receiving a cell switch command, the UE performs downlink (called DL for short) synchronization with candidate cell(s);
4b. When UE-based Timing Advance (TA) measurement is configured, the UE acquires TA value(s) of the candidate cell(s) by measurement;
   It is worth noting that before receiving the cell switch command, as request by the network, the UE performs early TA acquisition with the candidate cell(s). This is done via Contention Free Random Access (CFRA) triggered by a Physical Downlink Control Channel (PDCCH) order from a source cell, following which the UE transmits a preamble towards an indicated candidate cell, as shown in FIG. 3, FIG. 3 is a schematic diagram of a random access procedure. To minimize data interruption of the source cell due to CFRA towards the candidate cell(s), the UE does not receive a random access response from the network for the purpose of TA value acquisition, and the TA value of the candidate cell is indicated in the cell switch command. The UE does not maintain a TA timer for the candidate cell but relies on network implementation to guarantee the TA validity.
5. The UE performs L1 measurement on configured candidate cell(s) and transmits L1 measurement reports to the gNB; wherein as long as RRC reconfiguration (step 2) is applicable, the L1 measurement should be performed.
6. The gNB decides to execute cell switch to a target cell and transmits a MAC CE for triggering the cell switch including a candidate configuration index of the target cell. The UE switches to the target cell and applies a configuration indicated by the candidate configuration index.
7. If the UE does not have a valid TA of the target cell, the UE performs a random access procedure towards the target cell.
8. The UE completes the LTM cell switch procedure by transmitting an *RRCReconfigurationComplete* message to the target cell.

It is worth noting that if the UE has performed a random access procedure in step 7, when the random access procedure is successfully completed, the UE considers that LTM cell switch execution is successfully completed. For RACH-less LTM, i.e., when step 7 is not performed, the UE considers that LTM cell switch execution is successfully completed when the UE determines that the network has successfully received its first UL data.

Moreover, for a random access procedure towards an LTM candidate cell for early UL TA acquisition, CFRA triggered by a PDCCH order is used. The UE transmits MSG1 (Message 1) towards the cell without monitoring for a response from the cell. To support UE power ramping, the UE may perform MSG1 retransmission according to a network indication.

In addition, for subsequent LTM, steps 4-8 can be performed multiple times using the LTM candidate configuration(s) provided in step 2. That is, the subsequent LTM is done by repeating early synchronization, LTM cell switch execution and LTM cell switch completion steps without the need to release other LTM candidate configurations after each LTM cell switch completion.

The inventor finds that L1 measurement for LTM mobility only supports periodic reporting and network-triggered semi-persistent reporting, which increases signaling overhead.

For at least one of the above problems or other similar problems, embodiments of the present disclosure provide a method and an apparatus for autonomous action based on terminal evaluation.

According to an aspect of embodiments of the present disclosure, an apparatus for autonomous action based on terminal evaluation is provided, configured in a terminal equipment, wherein the apparatus includes:
a receiving unit configured to receive a first configuration transmitted by a network device, the first configuration being related to a first condition based on L1 or L3 measurement; and
a processing unit configured to perform at least one of the following processes in a case where the first condition is satisfied: L1 measurement reporting, early uplink synchronization on a candidate cell, or LTM execution to a target cell.

One of advantageous effects of embodiments of the present disclosure lies in: according to embodiments of the present disclosure, in a case where a condition (a first condition) based on L1 measurement or L3 measurement is satisfied, a terminal equipment performs at least one of L1 measurement reporting, early uplink synchronization on a candidate cell, or LTM execution to a target cell, thereby autonomous action is achieved, and signaling overhead is saved.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of an inter-cell mobility scenario;
FIG. 2 is a schematic diagram of a UE behavior for conditional reconfiguration;
FIG. 3 is a schematic diagram of a CHO procedure within an AMF;
FIG. 4 is a schematic diagram of an overall procedure of LTM;
FIG. 5 is a schematic diagram of a random access procedure;
FIG. 6 is a schematic diagram of a method for autonomous action based on terminal evaluation in embodiments of the present disclosure;
FIG. 7 is a schematic diagram of a processing flow of a terminal equipment according to embodiments of the present disclosure;
FIG. 8 is a schematic diagram of a configuring method in embodiments of the present disclosure;
FIG. 9 is a schematic diagram of an apparatus for autonomous action based on terminal evaluation in embodiments of the present disclosure;
FIG. 10 is a schematic diagram of a configuring apparatus in embodiments of the present disclosure;
FIG. 11 is a schematic diagram of a communication system in embodiments of the present disclosure;
FIG. 12 is a schematic diagram of a terminal equipment in embodiments of the present disclosure;
FIG. 13 is a schematic diagram of a network device in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, in contrast, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system may be performed according to a communication protocol of any stage, which e.g. may include but be not limited to the following communication protocols: 1G (generation), 2G, 2.5G, 2.75G, 3G, 4G, 4.5G, 5G, New Radio (NR) and so on, and/or other communication protocols that are currently known or will be developed in future.

In embodiments of the present disclosure, term "network device" e.g. refers to a device configured to access a terminal equipment to a communication network in a communication system and provide services for the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

A base station may include but be not limited to: a node B (NodeB or NB), an evolution node B (eNodeB or eNB) and a 5G BS (gNB), etc., and may further includes a Remote Radio Head (RRH), a Remote Radio Unit (RRU), a relay or low power node (such as femeto, pico, etc.), an Integrated Access and Backhaul (IAB) node or an IAB-DU or IAB-donor. And term "base station" may include some or all functions thereof, and each base station may provide communication coverage to a specific geographic region. Term "cell" may refer to a base station and/or a coverage area thereof, which depends on a context in which this term is used. Without causing confusion, terms "cell" and "base station" are interchangeable.

In embodiments of the present disclosure, the term "User Equipment (UE)" or "Terminal Equipment (TE) or Terminal Device" e.g. refers to a device accessing a communication network and receiving network services via a network device. A TE may be fixed or mobile, and may also be called a Mobile Station (MS), a terminal, a Subscriber Station (SS), an Access Terminal (AT), an IAB-MT (Mobile Terminal), a station and so on.

A terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more of the above network devices. Term "user side" or "terminal side" or "terminal equipment side" refers to a side of a user or terminal, may be a certain UE, or may include one or more of the above terminal equipments. Unless otherwise specified herein, "device" may refer to a network device, or may refer to a terminal equipment.

Embodiments of the present disclosure are described below with reference to the drawings and specific implementations. In the following descriptions, without causing confusion, "if...", "in a case where..." and "when..." may be used interchangeably. In addition, contents in parentheses are used to further explain contents outside the parentheses, or optionally, are used to further define contents outside the parentheses.

### Embodiments of a First Aspect

Embodiments of the present disclosure provide a method for autonomous action based on terminal evaluation, which is described from a side of a terminal equipment.

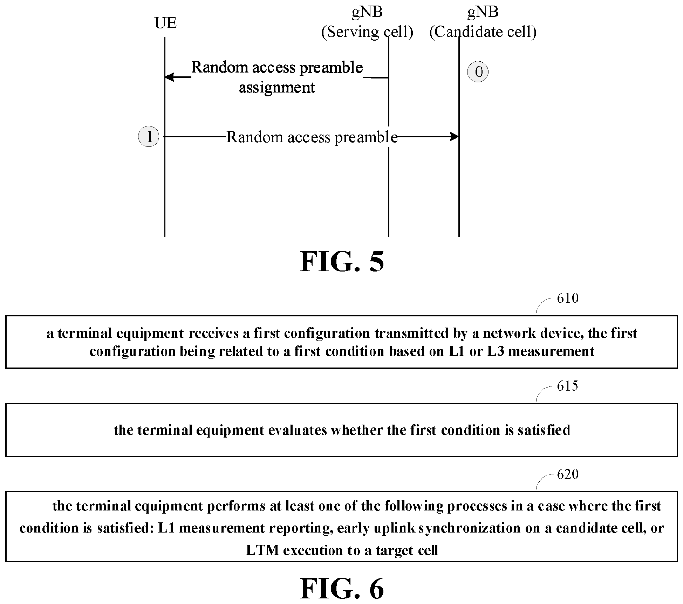

FIG. 6 is a schematic diagram of the method for autonomous action based on terminal evaluation in embodiments of the present disclosure. As shown in FIG. 6, the method includes:
610: a terminal equipment receives a first configuration transmitted by a network device, the first configuration being related to a first condition based on L1 or L3 measurement; and
620: the terminal equipment performs at least one of the following processes in a case where the first condition is satisfied: L1 measurement reporting, early uplink synchronization on a candidate cell, or LTM execution to a target cell.

It is worth noting that the above FIG. 6 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 6.

For example, as shown in FIG. 6, the method may further include:
615: the terminal equipment evaluates whether the first condition is satisfied. Relevant contents about the first condition will be described later.

In the above embodiments, evaluating whether the first condition is satisfied may further be determining whether to perform at least one of the above processing. For example, the first condition is satisfied, which means that the at least one of the above processing may be performed.

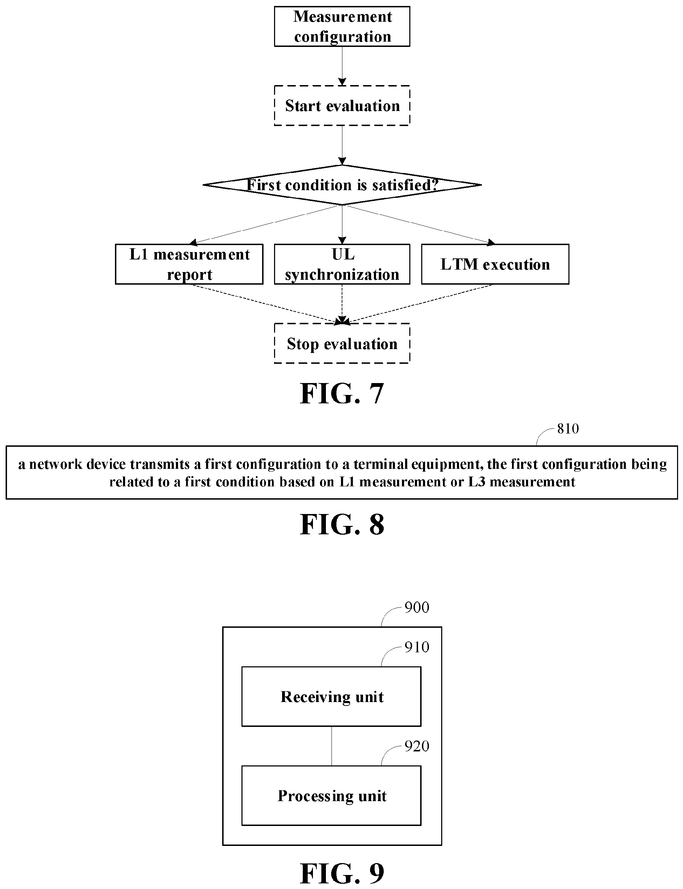

FIG. 7 is a schematic diagram of a processing flow of a terminal equipment according to the above embodiments. As shown in FIG. 7, after receiving a measurement configuration, the terminal equipment first performs evaluation, i.e., evaluating whether the first condition is satisfied or evaluating whether to perform the at least one of the above processing, and in a case where the first condition is satisfied or the at least one of the above processing may be performed, performs at least one of L1 measurement reporting, UL synchronization, or LTM execution, and then stops the evaluation.

According to the above embodiments, in a case where the condition (the first condition) based on L1 measurement or L3 measurement is satisfied, the terminal equipment performs at least one of L1 measurement reporting, early uplink synchronization on a candidate cell, or LTM execution to a target cell, thereby autonomous action is achieved, and signaling overhead is saved.

Regarding a configuration related to the first condition based on L1 measurement, in some embodiments, the network device uses RRC signaling to configure the first condition based on L1 measurement. For example, the first configuration is transmitted via RRC signaling, and the first condition based on L1 measurement is included in the first configuration.

In the above embodiments, in some possible implementations, a physical layer of the terminal equipment may evaluate whether the first condition is satisfied, and provide an indication of whether the first condition is satisfied and/or information related to the first condition to a MAC layer of the terminal equipment. The information related to the first condition may be e.g., cell information that meets the first condition, cell information that does not meet the first condition, a measurement result related to the first condition, etc. Thus, the MAC layer of the terminal equipment may determine whether (one or more candidate cells) meet(s) the first condition according to evaluation of the physical layer, and if yes, perform processing of operation 620.

In the above embodiments, in some other possible implementations, the MAC layer of the terminal equipment may evaluate whether the first condition is satisfied based on an indication or information related to L1 measurement provided by the physical layer. The indication or information related to L1 measurement e.g., is an L1 measurement result, etc. Thus, the MAC layer of the terminal equipment may determine whether the first condition is satisfied according to its own evaluation, and if yes, perform processing of operation 620.

Regarding a configuration related to the first condition based on L3 measurement, in some embodiments, a network device uses RRC signaling to configure the first condition based on L3 measurement. For example, the first configuration is transmitted via RRC signaling, and the first condition based on L3 measurement is included in the first configuration.

In the above embodiments, in some possible implementations, an RRC layer of the terminal equipment evaluates whether the first condition is satisfied, and provide an indication of whether the first condition is satisfied and/or information related to the first condition to the MAC layer of the terminal equipment. The information related to the first condition may be e.g., cell information that meets the first condition, cell information that does not meet the first condition, a measurement result related to the first condition, etc. Thus, the MAC layer of the terminal equipment may determine whether the first condition is satisfied according to evaluation of the RRC layer, and if yes, perform processing of operation 620.

In the above embodiments, in some other possible implementations, the MAC layer of the terminal equipment may evaluate whether the first condition is satisfied based on an indication or information related to L3 measurement provided by the RRC layer. The indication or information related to L3 measurement e.g., is an L3 measurement result, etc. Thus, the MAC layer of the terminal equipment may determine whether the first condition is satisfied according to its own evaluation, and if yes, perform processing of operation 620.

Regarding a configuration related to the first condition based on L1 measurement or L3 measurement, in some further embodiments, the network device configures a count value and/or a timer value for the first condition via RRC signaling. For example, the first configuration is transmitted via the RRC signaling, and the count value and/or the timer value for the first condition is/are included in the first configuration.

In the above embodiments, the count value may be a value of a counter, or may be a maximum value for counting, etc.; the timer value may further be a value of a window, a duration, etc.

In the above embodiments, the MAC layer of the terminal equipment may evaluate whether the first condition is satisfied based on the first configuration. Optionally, the physical layer of the terminal equipment may further provide an indication or information related to L1 measurement, such as an L1 measurement result, etc., to the MAC layer, and the MAC layer of the terminal equipment may evaluate whether the first condition is satisfied based on the first configuration and/or the indication or information related to L1 measurement.

In the above embodiments, first condition is predefined, for example, may be defined in the Standard, and the present disclosure does not impose any limitation on an implementation manner thereof.

In the above embodiments, a configuration for enabling or indicating the count value and/or the timer value may further be added. For example, the first configuration may further include indication information, the indication information being used to indicate whether the count value and/or the timer value is/are allowed or enabled.

Regarding the first condition, in some embodiments, the first condition includes at least one of the following:
a serving cell becomes better than a first value;
a serving cell becomes worse than a second value;
a candidate cell becomes better than a third value;
a serving cell or a special cell becomes worse than a fourth value, and a candidate cell becomes better than a fifth value;
a candidate cell becomes better than a serving cell or a special cell;
a first time has passed since last early uplink synchronization on a candidate cell or L1 measurement reporting is performed; or
a serving cell becomes worse.

In the above embodiments, that the serving cell becomes better than a first value e.g., refers to at least one of the following:
the number of first indications of the serving cell received from a lower layer (e.g., a physical layer) reaches a value n1;
during t1, the number of first indications of the serving cell received from the lower layer (e.g., a physical layer) reaches the value n1; or
the number of consecutive first indications of the serving cell received from the lower layer (e.g., a physical layer) reaches the value n1.

In the above embodiments, the first indication is used to indicate that an L1 measurement (e.g., RSRP and/or SINR) result of the serving cell is better than the first value. For example, when the L1 measurement result of at least one reference signal (e.g., all reference signals or all configured reference signals) of the serving cell is better than the first value, the lower layer (e.g., a physical layer) provides the first indication to an upper layer (e.g., a MAC layer); when the number of the first indications reaches the value n1, or during t, the number of the first indications reaches the value n1, or the number of consecutive first indications reaches the value n1, it is considered that the serving cell becomes better than the first value, or the first condition is satisfied, or one of the above processing may be performed.

In the above examples, the MAC layer may define at least one of a first counter, a first variable, a first timer, or a second timer, so as to determine whether the serving cell becomes better than the first value by combining with their values or states.

For example, when the MAC layer receives the first indication from the lower layer, the first counter or the first variable is incremented by 1; when the first counter or the first variable is equal to (or greater than) n1, it is considered that the serving cell becomes better than the first value, or the first condition is satisfied, or one of the above processing may be performed.

For another example, when the MAC layer receives the first indication from the lower layer, the first counter or the first variable is incremented by 1; if the first indication has not been received before and the first timer is not running, the first timer is started; when the first counter or the first variable is equal to (or greater than) n1, if the first timer is running, it is considered that the serving cell becomes better than the first value, or the first condition is satisfied, or one of the above processing may be performed. When the first timer expires, the first counter or the first variable is set to 0; for example, a duration of the first timer is the t.

For another example, when the MAC layer receives the first indication from the lower layer, if the second timer is running, the first counter or the first variable is incremented by 1, and the second timer is restarted; when the first counter or the first variable is equal (or greater than) n1, it is considered that the serving cell becomes better than the first value, or the first condition is satisfied, or one of the above processing may be performed; and when the first timer expires, the first counter or the first variable is set to 0. For example, a duration of the second timer is the t2.

In the above examples, a name of the first counter and/or the first variable may be GoodInstance_Counter, the present disclosure is not limited thereto.

In the above embodiments, the consecutive first indications refer to that there is no other indication between two first indications, or two first indications are received during t2. For example, when a first indication is received, a timer T2 is started; if the timer T2 is still running (does not expires) when a next first indication is received, it is considered that the two first indications are consecutive first indications.

In the above embodiments, the first value is a threshold for comparison with the serving cell, and may be RSRP, or may be SINR, or a combination of the two.

The above embodiments are applicable to L1 measurement reporting, that is, according to the above embodiments, when the serving cell becomes better than the first value, the terminal equipment may perform L1 measurement reporting.

In the above embodiments, that the serving cell becomes worse than a second value e.g., refers to at least one of the following:
the number of second indications of the serving cell received from a lower layer (e.g., a physical layer) reaches a value n2;
during t1, the number of second indications of the serving cell received from the lower layer (e.g., a physical layer) reaches the value n2; or
the number of consecutive second indications of the serving cell received from the lower layer (e.g., a physical layer) reaches the value n2.

In the above embodiments, the second indication is used to indicate that an L1 measurement (e.g., RSRP and/or SINR) result of the serving cell is worse than the second value. For example, when the L1 measurement result of at least one reference signal (e.g., all reference signals or all configured reference signals) of the serving cell is worse than the second value, the lower layer (e.g., a physical layer) provides the second indication to an upper layer (e.g., a MAC layer); when the number of the second indications reaches the value n2, or during t, the number of the second indications reaches the value n2, or the number of consecutive second indications reaches the value n2, it is considered that the serving cell becomes worse than the second value, or the first condition is satisfied, or one of the above processing may be performed.

In the above examples, the MAC layer may define a counter and/or a variable and/or a timer, so as to determine whether the serving cell becomes worse than the second value by combining with a value of the counter and/or the variable and/or a state of the timer. Specific examples are similar to those described above and are not elaborated here.

In the above embodiments, the consecutive second indications refer to that there is no other indication between two second indications, or two second indications are received during t2. For example, when a second indication is received, a timer T2 is started; if the timer T2 is still running (does not expires) when a next second indication is received, it is considered that the two second indications are consecutive second indications.

In the above embodiments, the second value is a threshold for comparison with the serving cell, and may be RSRP, or may be SINR, or a combination of the two.

The above embodiments are applicable to L1 measurement reporting, early uplink synchronization on a candidate cell, and LTM execution to a target cell, that is, according to the above embodiments, when the serving cell becomes worse than the second value, the terminal equipment may perform L1 measurement reporting, or may further perform early uplink synchronization on a candidate cell, and/or perform LTM execution to a target cell.

In the above embodiments, that the candidate cell becomes better than a third value e.g., refers to at least one of the following:
the number of third indications of the candidate cell received from a lower layer (e.g., a physical layer) reaches a value n3;
during t1, the number of third indications of the candidate cell received from the lower layer (e.g., a physical layer) reaches the value n3; or
the number of consecutive third indications of the candidate cell received from the lower layer (e.g., a physical layer) reaches the value n3.

In the above embodiments, the third indication is used to indicate that an L1 measurement (e.g., RSRP and/or SINR) result of the candidate cell is better than the third value. For example, when the L1 measurement result of at least one reference signal (e.g., all reference signals or all configured reference signals) of the candidate cell is better than the third value, the physical layer provides the third indication to an upper layer (e.g., a MAC layer); when the number of the third indications reaches the value n3, or during t, the number of the third indications reaches the value n3, or the number of consecutive third indications reaches the value n3, it is considered that the candidate cell becomes better than the third value, or the first condition is satisfied, or one of the above processing may be performed.

In the above examples, the MAC layer may define a counter and/or a variable and/or a timer, so as to determine whether the candidate cell becomes better than the third value by combining with a value of the counter and/or the variable and/or a state of the timer. Specific examples are similar to those described above and are not elaborated here.

In the above embodiments, the consecutive third indications refer to that there is no other indication between two third indications, or two third indications are received during t2. For example, when a third indication is received, a timer T2 is started; if the timer T2 is still running (does not expires) when a next third indication is received, it is considered that the two third indications are consecutive third indications.

In the above embodiments, the third value is a threshold for comparison with the serving cell, and may be RSRP, or may be SINR, or a combination of the two.

The above embodiments are applicable to L1 measurement reporting, early uplink synchronization on a candidate cell, and LTM execution to a target cell, that is, according to the above embodiments, when the candidate cell becomes better than the third value, the terminal equipment may perform L1 measurement reporting, or may further perform early uplink synchronization on a candidate cell, and/or perform LTM execution to a target cell.

In the above embodiments, that the serving cell or the special cell becomes worse than a fourth value, and the candidate cell becomes better than a fifth value e.g., refers to at least one of the following:
the number of fifth indications of the candidate cell received from a lower layer (e.g., a physical layer) reaches the value n1, and the number of fourth indications of the serving cell or the special cell received from a physical layer reaches the value n2;
during t1, the number of fifth indications of the candidate cell received from a lower layer (e.g., a physical layer) reaches the value n1, and the number of fourth indications of the serving cell or the special cell received from a physical layer reaches the value n2; or
the number of consecutive fifth indications of the candidate cell received from a lower layer (e.g., a physical layer) reaches the value n1, and the number of consecutive fourth indications of the serving cell or the special cell received from a physical layer reaches the value n2.

In the above embodiments, the fifth indication is used to indicate that an L1 measurement (e.g., RSRP and/or SINR) result of the candidate cell is better than the fifth value, and the fourth indication is used to indicate that an L1 measurement (e.g., RSRP and/or SINR) result of the serving cell or the special cell is worse than the fourth value. For example, when the L1 measurement result of at least one reference signal (e.g., all reference signals or all configured reference signals) of the candidate cell is better than the fifth value, the lower layer (e.g., a physical layer) provides the fifth indication to an upper layer (e.g., a MAC layer); when the L1 measurement result of at least one reference signal (e.g., all reference signals or all configured reference signals) of the serving cell or the special cell is worse than the fourth value, the lower layer (e.g., a physical layer) provides the fourth indication to an upper layer (e.g., a MAC layer); when the number of the fifth indications reaches the value n1 and the number of the fourth indications reaches the value n2, or during t, the number of the fifth indications reaches the value n1 and the number of the fourth indications reaches the value n2, or the number of the consecutive fifth indications reaches the value n1 and the number of the consecutive fourth indications reaches the value n2, it is considered that the serving cell or the special cell becomes worse than the fourth value and the candidate cell becomes better than the fifth value, or it is considered that the first condition is satisfied, or one of the above processing may be performed.

In the above examples, the MAC layer may define a counter and/or a variable and/or a timer, so as to determine whether the serving cell or the special cell becomes worse than the fourth value, and whether the candidate cell becomes better than the fifth value by combining with a value of the counter and/or the variable and/or a state of the timer. Specific examples are similar to those described above and are not elaborated here.

In the above embodiments, the consecutive fourth indications refer to that there is no other indication between two fourth indications, or two fourth indications are received during t2. For example, when a fourth indication is received, a timer T2 is started; if the timer T2 is still running (does not expires) when a next fourth indication is received, it is considered that the two fourth indications are consecutive fourth indications. A meaning of the consecutive fifth indications is similar and is not elaborated here.

In the above embodiments, the fourth value is a threshold for comparison with the serving cell or the special cell, and the fifth value is a threshold for comparison with the candidate cell. The threshold may be RSRP, or may be SINR, or a combination of the two.

The above embodiments are applicable to L1 measurement reporting, early uplink synchronization on a candidate cell, and LTM execution to a target cell, that is, according to the above embodiments, when the serving cell or the special cell becomes worse than the fourth value and the candidate cell becomes better than the fifth value, the terminal equipment may perform L1 measurement reporting, or may further perform early uplink synchronization on a candidate cell, and/or perform LTM execution to a target cell.

In the above embodiments, that the candidate cell becomes better than the serving cell or the special cell e.g., refers to at least one of the following:
the number of sixth indications of the candidate cell received from a lower layer (e.g., a physical layer) reaches a value n3;
during t1, the number of sixth indications of the candidate cell received from the lower layer (e.g., a physical layer) reaches the value n3; or
the number of consecutive sixth indications of the candidate cell received from the lower layer (e.g., a physical layer) reaches the value n3.

In the above embodiments, the sixth indication is used to indicate that an L1 measurement (e.g., RSRP and/or SINR) result of the candidate cell is better than an L1 measurement (e.g., RSRP and/or SINR) result of the serving cell or the special cell. For example, when the L1 measurement result of at least one reference signal (e.g., all reference signals or all configured reference signals) of the candidate cell is better than the L1 measurement result of at least one reference signal (e.g., all or any reference signals) of the serving cell or the special cell by a certain offset, the lower layer (e.g., a physical layer) provides the sixth indication to an upper layer (e.g., a MAC layer); when the number of the sixth indications reaches the value n3, or during t, the number of the sixth indications reaches the value n3, or the number of consecutive sixth indications reaches the value n3, it is considered that the candidate cell becomes better than the serving cell or the special cell, or the first condition is satisfied, or one of the above processing may be performed.

In the above examples, the MAC layer may define a counter and/or a variable and/or a timer, so as to determine whether the candidate cell becomes better than the serving cell or the special cell by combining with a value of the counter and/or the variable and/or a state of the timer. Specific examples are similar to those described above and are not elaborated here.

In the above embodiments, the consecutive sixth indications refer to that there is no other indication between two sixth indications, or two sixth indications are received during t2. For example, when a sixth indication is received, a timer T2 is started; if the timer T2 is still running (does not expires) when a next sixth indication is received, it is considered that the two sixth indications are consecutive sixth indications.

The above embodiments are applicable to L1 measurement reporting, early uplink synchronization on a candidate cell, and LTM execution to a target cell, that is, according to the above embodiments, when the candidate cell becomes better than the serving cell or the special cell, the terminal equipment may perform L1 measurement reporting, or may further perform early uplink synchronization on a candidate cell, and/or perform LTM execution to a target cell.

In the above embodiments, a first time has passed since last L1 measurement reporting or early uplink synchronization on a candidate cell is performed, which is applicable to L1 measurement reporting and early uplink synchronization on a candidate cell.

For example, the first condition is that the first time has passed since last early uplink synchronization on a candidate cell is performed. If the first time has passed since last early uplink synchronization on a candidate cell is performed, the terminal equipment performs early uplink synchronization on the candidate cell.

Similarly, the first condition is that the first time has passed since last L1 measurement reporting is performed. If the first time has passed since last L1 measurement reporting is performed, the terminal equipment performs early uplink synchronization on a candidate cell; or, if the first time has passed since last L1 measurement reporting is performed, the terminal equipment performs L1 measurement reporting.

In the above embodiments, if the first condition is that the first time has passed since last early uplink synchronization on a candidate cell is performed, the first time may be determined according to a TA timer.

In the above embodiments, that the serving cell becomes worse e.g., refers to at least one of the following:
(during t1,) the number of (consecutive) uplink Negative Acknowledgements (NACKs) reaches a value n4;
(during t1,) the number of (consecutive) unsuccessful transmissions reaches the value n4; or
(during t1,) the number of (consecutive) Configured Grant (CG) transmission timeouts reaches the value n4.

For example, when the number of uplink NACKs reaches the value n4, or the number of consecutive uplink NACKs reaches the value n4, or during t1, the number of consecutive uplink NACKs reaches the value n4, it is considered that the serving cell becomes worse, or the first condition met, or one of the above processing may be performed.

For another example, when the number of unsuccessful transmissions reaches the value n4, or the number of consecutive unsuccessful transmissions reaches the value n4, or during t1, the number of consecutive unsuccessful transmissions reaches the value n4, it is considered that the serving cell becomes worse, or the first condition met, or one of the above processing may be performed.

For another example, when the number of CG transmission timeouts reaches the value n4, or the number of consecutive CG transmission timeouts reaches the value n4, or during t1, the number of consecutive CG transmission timeouts reaches the value n4, it is considered that the serving cell becomes worse, or the first condition met, or one of the above processing may be performed.

In the above examples, the MAC layer may define a counter and/or a variable and/or a timer, so as to determine whether the serving cell becomes worse by combining with a value of the counter and/or the variable and/or a state of the timer. Specific examples are similar to those described above and are not elaborated here.

In the above embodiments, the consecutive uplink NACKs refer to that there is no other information between two uplink NACKs, or two uplink NACKs are received during t2. For example, when an uplink NACK is received, a timer T2 is started; if the timer T2 is still running (does not expires) when a next uplink NACK is received, it is considered that the two uplink NACKs are consecutive uplink NACKs. The other information is non-NACK information, information other than NACKs, may be an acknowledgement (ACK, positive feedback), UL grant/DL assignment for scheduling a new transmission, etc.

In the above embodiments, the consecutive uplink NACKs may correspond to each terminal equipment, or may correspond to each MAC entity, or may correspond to each Hybrid Automatic Repeat reQuest (HARQ) process, the present disclosure does not impose any limitation in this regard.

In the above embodiments, the consecutive unsuccessful transmissions refer to that there is no successful transmission between two unsuccessful transmissions, or two unsuccessful transmissions are received during t2.

In the above embodiments, the consecutive unsuccessful transmissions and the CG transmissions may correspond to each terminal equipment, or may correspond to each MAC entity, or may correspond to each HARQ process, or may correspond to each CG configuration, the present disclosure does not impose any limitation in this regard.

The above text provides an exemplary description for the first condition, however the present disclosure is not limited thereto, appropriate variation(s) may be further made based on each of the above embodiments. For example, each of the above embodiments may be used individually, or one or more of the above embodiments may be combined.

In the above descriptions, "reach" may be equal to (=), or not smaller than, or larger than (>), or larger than or equal to (>=). For example, in case where the counter and/or the variable is defined, "reach" refers to that a counter value and/or a variable is equal to, not smaller than, larger than, or larger than or equal to the value n1, or the value n2, or the value n3, or the value n4.

Regarding performing L1 measurement reporting by the terminal equipment, in some embodiments, the terminal equipment may generate a MAC CE and perform L1 measurement reporting via the MAC CE.

In the above embodiments, the MAC CE may include at least one of the following:
cell information;
cell type information;
reference signal information;
measurement result information; or
indication information of a triggered event.

The cell information may be cell information of a serving cell and/or cell information of a candidate cell, and may be indicated via a bitmap. For example, that a bit value corresponding to the serving cell or the candidate configuration in the bitmap is set to 1 indicates that an L1 measurement result of the cell is included in the MAC CE. That is, if an L1 measurement result of a certain cell is included, a value corresponding to the serving cell or candidate configuration in the bitmap is set to 1; otherwise, the value is set to 0. There are at most 32 serving cells, occupying 4 octets, and there are at most 8 candidate configurations, occupying 1 octet.

The cell information may further be indicated by a cell index. For example, the MAC CE includes a serving cell index, or a candidate configuration ID, or PCI information corresponding to the cell. That is, if an L1 measurement result of a certain cell is included, a serving cell index, or a candidate configuration ID, or physical cell identifier (PCI) information corresponding to the cell is included.

The cell information may further be indicated jointly by a bitmap and a cell index. For example, if the number of cells including L1 measurement results is smaller than x (e.g., x=2), the cell index is used; otherwise, the bitmap is used. For another example, if the number of cells including L1 measurement results is larger than x (e.g., x=2) and a highest index of serving cells including L1 measurement results is smaller than y (e.g., y=8), the bitmap is used; otherwise, the cell index is used.

The cell type information indicates whether the cell information is cell information of a serving cell or cell information of a candidate cell. For example, the cell type information is set to 1, indicating that the cell information is cell information of a candidate cell; otherwise, indicating that the cell information is cell information of a serving cell. Or, on the contrary, for example, the cell type information is set to 0, indicating that the cell information is cell information of a candidate cell; otherwise, indicating that the cell information is cell information of a serving cell.

The reference signal information e.g., may include at least one of an SSB index, a CSI-RS resource ID, or an RS index, however the present disclosure is not limited thereto.

The measurement result information e.g., may include at least one of L1 RSRP and L1 SINR, however the present disclosure is not limited thereto.

The indication information of a triggered event e.g., may include at least one of an event identifier (ID) and an event index, however the present disclosure is not limited thereto.

In the above embodiments, the MAC CE may be a normal MAC CE, i.e., truncation is not supported, or may be a truncated MAC CE. If the MAC CE is a truncated MAC CE, the truncated MAC CE may include an L1 measurement result of an optimal candidate cell. Thus, candidate cells available to a terminal and corresponding measurement results may be reported in a timely manner.

In the above embodiments, a Logical Channel Priority (LCP) of the MAC CE may be the same as a priority of an enhanced BFR (Beam Failure Recovery) MAC CE, or may be lower or higher than the priority of the enhanced BFR MAC CE, or may further be higher or lower than a priority of a Listen Before Talk (LBT) failure, or may be higher or lower than a priority of a MAC CE for sidelink configured grant confirmation. The present disclosure does not impose any limitation in this regard.

In the above embodiments, the terminal equipment may further trigger a Scheduling Request (SR). For example, if an uplink grant available for a new transmission cannot accommodate the MAC CE as a result of logical channel prioritization (LCP), the terminal equipment triggers a scheduling request.

In the above embodiments, the scheduling request may use dedicated SR configuration for L1 measurement or use other SR configuration (e.g., called a first SR configuration). The first SR configuration may be at least one of an SR configuration for Buffer Status Report (BSR) reporting, an SR configuration for BFR reporting, or an SR configuration for LBT failure reporting, the present disclosure does not impose any limitation in this regard.

In the above embodiments, the terminal equipment may further cancel the L1 measurement reporting. For example, the terminal equipment cancels theL1 measurement reporting in a case where at least one of the following conditions is satisfied, the conditions including:
the count value and/or the timer value or a reference signal of a candidate cell or a serving cell that meets the first condition is reconfigured (e.g., reconfigured by an RRC layer or a higher layer);
a MAC CE including the L1 measurement reporting has been generated or successfully transmitted; or
a MAC PDU where the MAC CE including the L1 measurement reporting is located has been assembled or successfully transmitted.

Thus, in a case where at least one of the above conditions is satisfied, the terminal equipment cancels theL1 measurement reporting, which may achieve UE energy saving and reduce signaling overhead.

In embodiments of the present disclosure, as shown in FIG. 7, optionally, the terminal equipment may further start evaluating whether the first condition is satisfied. In some embodiments, the terminal equipment may evaluate whether the first condition is satisfied in a case where at least one of the following conditions is satisfied:
RRC signaling is received;
RRC signaling is received, and when the RRC signaling configures or reconfigures the first condition, or when the RRC signaling enables or allows evaluation of the first condition;
when handover is completed;
when a serving cell becomes worse;
when an indication for indicating start of evaluation, from a network device, is received;
after downlink has been synchronized; or
after downlink and/or uplink has/have been synchronized.

For example, when the terminal equipment receives the RRC signaling, the RRC signaling being used to configure or reconfigure the first condition or to enable or allow evaluation of the first condition, the terminal equipment starts evaluating whether the first condition is satisfied.

For another example, when handover is completed, if the RRC signaling provides the first condition or an indication for a serving cell after handover, the terminal equipment starts evaluating whether the first condition is satisfied.

For another example, when an L1 or L2 indication for indicating start of evaluation, from a network device, is received, the terminal equipment starts evaluating whether the first condition is satisfied.

For another example, after downlink has been synchronized, the terminal equipment starts evaluating whether the first condition is satisfied. This example is applicable to "early uplink synchronization on a candidate cell". For example, after downlink has been synchronized, the terminal equipment starts evaluating whether the first condition for performing early uplink synchronization on a candidate cell is satisfied.

For another example, after downlink and/or uplink has/have been synchronized, the terminal equipment starts evaluating whether the first condition is satisfied. This example is applicable to "LTM execution to a target cell". For example, after downlink and/or uplink has/have been synchronized, the terminal equipment starts evaluating whether the first condition for performing LTM execution to a target cell is satisfied.

In embodiments of the present disclosure, as shown in FIG. 7, optionally, the terminal equipment may further stop evaluating whether the first condition is satisfied. In some embodiments, the terminal equipment may stop evaluating whether the first condition is satisfied in a case where at least one of the following conditions is satisfied:
RRC signaling is received;
RRC signaling is received, and when the RRC signaling releases or deactivates or disallows or prohibits the first condition;
when handover is completed;
when a serving cell becomes better;
when a failure is detected;
when failure recovery is initiated; or
after uplink has been synchronized.

For example, when the RRC signaling received by the terminal equipment is to release or deactivate or disallow or prohibit the first condition, the terminal equipment stop evaluation.

For another example, when handover is completed, if the RRC signaling does not provide a condition or an indication for a serving cell after handover, the terminal equipment stop evaluation.

For another example, when quality of the serving cell becomes better, the terminal equipment stop evaluation. Relevant contents regarding "quality of the serving cell becomes better" have been described above, and are not elaborated here.

For another example, when the terminal equipment detects a failure, the terminal equipment notifies evaluation. Here, the detected failure may be e.g., an RLF, a HOF, a consistency check failure, an integrity check failure, etc., and the present disclosure is not limited thereto.

For another example, when failure recovery is initiated, the terminal equipment stops evaluation. The failure recovery may be e.g., RRC connection re-establishment, and the present disclosure is not limited thereto.

For another example, after uplink has been synchronized, the terminal equipment stops evaluation. This example is applicable to "early uplink synchronization on a candidate cell". For example, after uplink has been synchronized, the terminal equipment stops evaluating whether the first condition is satisfied. For example, the first condition is a first condition for the terminal equipment to perform early uplink synchronization on a candidate cell.

The above text provides an exemplary description of a method in embodiments of the present disclosure, however the present disclosure is not limited thereto, appropriate variation(s) may be further made based on each of the above embodiments. For example, each of the above embodiments may be used individually, or one or more of the above embodiments may be combined.

According to the method in the above embodiments, in a case where a condition (the first condition) based on L1 measurement or L3 measurement is satisfied, the terminal equipment performs at least one of L1 measurement reporting, early uplink synchronization on a candidate cell, or LTM execution to a target cell, thereby autonomous action is achieved, and signaling overhead is saved.

Embodiments of the present disclosure further provide a configuring method, which is described from a side of a network device, the method being processing on a network side corresponding to the method in the above embodiments, and the same contents are not repeated.

FIG. 8 is a schematic diagram of the configuring method in embodiments of the present disclosure, as shown in FIG. 8, the method includes:
810: a network device transmits a first configuration to a terminal equipment, the first configuration being related to a first condition based on L1 measurement or L3 measurement; the first condition being used to trigger the terminal equipment to perform at least one of the following processes: L1 measurement reporting, early uplink synchronization on a candidate cell, or LTM execution to a target cell.

In some embodiments, the first configuration is transmitted via RRC signaling, and the first condition based on L1 measurement is included in the first configuration.

In some embodiments, the first configuration is transmitted via RRC signaling, and the first condition based on L3 measurement is included in the first configuration.

In some embodiments, the first configuration is transmitted via RRC signaling, and a count value and/or a timer value for the first condition is/are included in the first configuration.

In the above embodiments, the first configuration may further include indication information to indicate whether the count value and/or the timer value is/are allowed or enabled.

In some embodiments, the network device may further perform at least one of the following processes:
receiving L1 measurement reporting (corresponding to L1 measurement reporting of a UE side) transmitted by the terminal equipment;
receiving a preamble (corresponding to early uplink synchronization on a candidate cell) transmitted by the terminal equipment; or
receiving a first UL transmission (corresponding to LTM execution to a target cell) transmitted by the terminal equipment.

The above processing corresponds to behaviors of a UE side.

According to the method in the above embodiments, the network device transmits a configuration related to the first condition based on L1 measurement or L3 measurement to the terminal equipment, so as to control the terminal equipment to perform at least one of L1 measurement reporting, early uplink synchronization on a candidate cell, or LTM execution to a target cell in a case where the condition (the first condition) based on L1 measurement or L3 measurement is satisfied, thereby autonomous action controlled by a network is achieved, signaling overhead is saved and meanwhile, an inappropriate terminal autonomous behavior is avoided.

### Embodiments of a Second Aspect

Embodiments of the present disclosure provide an apparatus for autonomous action based on terminal evaluation, the apparatus may be e.g. a terminal equipment, or may be one or more components or assemblies configured in the terminal equipment. A principle by which the apparatus solves problems is same as the method shown in FIG. 6 in embodiments of the first aspect, thus a specific implementation thereof may refer to implementation of the method shown in FIG. 6 in embodiments of the first aspect, and the same contents are not repeated.

FIG. 9 is a schematic diagram of the apparatus for autonomous action based on terminal evaluation in embodiments of the present disclosure. As shown in FIG. 9, the apparatus 900 includes:
a receiving unit 910 configured to receive a first configuration transmitted by a network device, the first configuration being related to a first condition based on L1 measurement or L3 measurement; and
a processing unit 920 configured to perform at least one of the following processes in a case where the first condition is satisfied: L1 measurement reporting, early uplink synchronization on a candidate cell, or LTM execution to a target cell.

In some embodiments, the processing unit 920 may further evaluate whether the first condition is satisfied or whether to perform at least one of the above processing.

In some embodiments, the first configuration is transmitted via RRC signaling, and the first condition based on L1 measurement is included in the first configuration.

In the above embodiments, the processing unit 920 may, via a physical layer of the terminal equipment, evaluate whether the first condition is satisfied or whether to perform at least one of the above processing, and provide an indication of whether the first condition is satisfied and/or information related to the first condition to a MAC layer of the terminal equipment; or, the processing unit 920 may, via the MAC layer of the terminal equipment, evaluate whether the first condition is satisfied or whether to perform at least one of the above processing based on an indication or information related to L1 measurement provided by the physical layer.

In some other embodiments, the first configuration is transmitted via RRC signaling, and the first condition based on L3 measurement is included in the first configuration.

In the above embodiments, the processing unit 920 may, via an RRC layer of the terminal equipment, evaluate whether the first condition is satisfied or whether to perform at least one of the above processing, and provide an indication of whether the first condition is satisfied and/or information related to the first condition to the MAC layer of the terminal equipment; or, the processing unit 920, via the MAC layer of the terminal equipment, evaluates whether the first condition is satisfied or whether to perform at least one of the above processing based on an indication or information related to L3 measurement provided by the RRC layer.

In some further embodiments, the first configuration is transmitted via RRC signaling, and a count value and/or a timer value for the first condition is/are included in the first configuration.

In the above embodiments, the processing unit 920 may evaluate, via the MAC layer of the terminal equipment, whether the first condition is satisfied or whether to perform at least one of the above processing based on an indication related to L1 measurement provided by the physical layer of the terminal equipment and/or the first configuration (count value and/or timer value).

In the above embodiments, the first condition is predefined.

In the above embodiments, the first configuration may further include indication information, the indication information being used to indicate whether the count value and/or the timer value is/are allowed or enabled.

In the above embodiments, the first condition may include at least one of the following:
a serving cell becomes better than a first value;
a serving cell becomes worse than a second value;
a candidate cell becomes better than a third value;
a serving cell or a special cell becomes worse than a fourth value, and a candidate cell becomes better than a fifth value;
a candidate cell becomes better than a serving cell or a special cell;
a first time has passed since last L1 measurement reporting or early uplink synchronization on a candidate cell is performed; or
a serving cell becomes worse.

In the above embodiments, that the serving cell becomes better than a first value may include at least one of the following:
the number of first indications of the serving cell received from a lower layer (e.g., a physical layer) reaches a value n1;
during t1, the number of first indications of the serving cell received from the lower layer (e.g., a physical layer) reaches the value n1; or
the number of consecutive first indications of the serving cell received from the lower layer (e.g., a physical layer) reaches the value n1.

In the above embodiments, the first indication is used to indicate that an L1 measurement result of at least one reference signal of the serving cell is better than the first value. In other words, when the L1 measurement result of at least one reference signal of the serving cell is better than the first value, the lower layer (e.g., a physical layer) provides the first indication.

In the above embodiments, the consecutive first indications refer to that there is no other indication between two first indications, or two first indications are received during t2.

The above embodiments are applicable to L1 measurement reporting, that is, if the serving cell becomes better than the first value, the processing unit 920 performs L1 measurement reporting.

In the above embodiments, that the serving cell becomes worse than a second value may include at least one of the following:
the number of second indications of the serving cell received from a lower layer (e.g., a physical layer) reaches a value n2;
during t1, the number of second indications of the serving cell received from the lower layer (e.g., a physical layer) reaches the value n2; or
the number of consecutive second indications of the serving cell received from the lower layer (e.g., a physical layer) reaches the value n2.

In the above embodiments, the second indication is used to indicate that an L1 measurement result of at least one reference signal of the serving cell is worse than the second value. In other words, when the L1 measurement result of at least one reference signal of the serving cell is worse than the second value, the lower layer (e.g., a physical layer) provides the second indication.

In the above embodiments, the consecutive second indications refer to that there is no other indication between two second indications, or two second indications are received during t2.

The above embodiments are applicable to L1 measurement reporting, early uplink synchronization on a candidate cell, and LTM execution to a target cell, that is, if the serving cell becomes worse than the second value, the processing unit 920 performs at least one of L1 measurement reporting, early uplink synchronization on a candidate cell, or LTM execution to a target cell.

In the above embodiments, that the candidate cell becomes better than a third value may include at least one of the following:
the number of third indications of the candidate cell received from a lower layer (e.g., a physical layer) reaches a value n3;
during t1, the number of third indications of the candidate cell received from the lower layer (e.g., a physical layer) reaches the value n3; or
the number of consecutive third indications of a candidate cell received from the lower layer (e.g., a physical layer) reaches the value n3.

In the above embodiments, the third indication is used to indicate that an L1 measurement result of at least one reference signal of the candidate cell is better than the third value. In other words, when the L1 measurement result of at least one reference signal of the candidate cell is better than the third value, the lower layer (e.g., a physical layer) provides the third indication.

In the above embodiments, the consecutive third indications refer to that there is no other indication between two third indications, or two third indications are received during t2.

The above embodiments are applicable to L1 measurement reporting, early uplink synchronization on a candidate cell, and LTM execution to a target cell. That is, if the candidate cell becomes better than the third value, the processing unit 920 performs at least one of L1 measurement reporting, early uplink synchronization on a candidate cell, or LTM execution to a target cell.

In the above embodiments, that the serving cell or the special cell becomes worse than a fourth value, and the candidate cell becomes better than a fifth value may include at least one of the following:
the number of fifth indications of the candidate cell received from a lower layer (e.g., a physical layer) reaches a value n1, and the number of fourth indications of the serving cell or the special cell received from the physical layer reaches a value n2;
during t1, the number of fifth indications of the candidate cell received from the lower layer (e.g., a physical layer) reaches the value n1, and the number of fourth indications of the serving cell or the special cell received from the physical layer reaches the value n2; or
the number of consecutive fifth indications of the candidate cell received from the lower layer (e.g., a physical layer) reaches the value n1, and the number of consecutive fourth indications of the serving cell or the special cell received from the physical layer reaches the value n2.

In the above embodiments, the fifth indication is used to indicate that an L1 measurement result of at least one reference signal of the candidate cell is better than the fifth value, and the fourth indication is used to indicate that an L1 measurement result of at least one reference signal of the serving cell or the special cell is worse than the fourth value. In other words, when the L1 measurement result of at least one reference signal of the candidate cell is better than the fifth value, the lower layer (e.g., a physical layer) provides the fifth indication; and when the L1 measurement result of at least one reference signal of the serving cell or the special cell is worse than the fourth value, the lower layer (e.g., a physical layer) provides the fourth indication.

In the above embodiments, the consecutive fourth indications refer to that there is no other indication between two fourth indications, or two fourth indications are received during t2.

In the above embodiments, the consecutive fifth indications refer to that there is no other indication between two fifth indications, or two fifth indications are received during t2.

The above embodiments are applicable to L1 measurement reporting, early uplink synchronization on a candidate cell, and LTM execution to a target cell. That is, if the serving cell or the special cell becomes worse than the fourth value, and the candidate cell becomes better than the fifth value, the processing unit 920 performs at least one of L1 measurement reporting, early uplink synchronization on a candidate cell, or LTM execution to a target cell.

In the above embodiments, that the candidate cell becomes better than a serving cell or a special cell may include at least one of the following:
the number of sixth indications of the candidate cell received from a lower layer (e.g., a physical layer) reaches a value n3;
during t1, the number of sixth indications of the candidate cell received from the lower layer (e.g., a physical layer) reaches the value n3; or
the number of consecutive sixth indications of the candidate cell received from the lower layer (e.g., a physical layer) reaches the value n3.

In the above embodiments, the sixth indication is used to indicate that an L1 measurement result of at least one reference signal of the candidate cell is better than an L1 measurement result of at least one reference signal of the serving cell or the special cell by an offset. In other words, when the L1 measurement result of at least one reference signal of the candidate cell is better than the L1 measurement result of at least one reference signal of the serving cell or the special cell by the offset, the lower layer (e.g., a physical layer) provides the sixth indication.

In the above embodiments, the consecutive sixth indications refer to that there is no other indication between two sixth indications, or two sixth indications are received during t2.

The above embodiments are applicable to that the serving cell or the special cell becomes worse than the fourth value, and the candidate cell becomes better than the fifth value. That is, if the candidate cell becomes better than the serving cell or the special cell, the processing unit 920 performs at least one of L1 measurement reporting, early uplink synchronization on a candidate cell, or LTM execution to a target cell.

In the above embodiments, if the first condition is that: a first time has passed since last L1 measurement reporting is performed, the processing unit 920 may perform at least one of L1 measurement reporting, and early uplink synchronization on a candidate cell.

In the above embodiments, if the first condition is that: a first time has passed since last early uplink synchronization on a candidate cell is performed, the processing unit 920 may perform early uplink synchronization on a candidate cell.

In the above embodiments, if the processing unit 920 performs early uplink synchronization on a candidate cell, the first time may be determined according to a TA timer.

In the above embodiments, that the serving cell becomes worse may include at least one of the following:
the number of uplink NACKs reaches a value n4, for example, during t1, the number of consecutive uplink NACKs reaches the value n4;
the number of unsuccessful transmissions reaches the value n4, for example, during t1, the number of consecutive unsuccessful transmissions reaches the value n4; or
the number of CG transmission timeouts reaches the value n4, for example, during t1, the number of CG transmission timeouts reaches the value n4.

In the above embodiments, the consecutive uplink NACKs refer to that there is no other information between two uplink NACKs, or two uplink NACKs are received during t2.

In the above embodiments, the consecutive unsuccessful transmissions refer to that there is no successful transmission between two unsuccessful transmissions, or there are two unsuccessful transmissions during t2.

In some embodiments, that the processing unit 920 performs L1 measurement reporting includes that:
the processing unit 920 generates a MAC CE, and performs L1 measurement reporting via the MAC CE.

In the above embodiments, the MAC CE may include at least one of the following:
cell information;
cell type information;
reference signal information;
measurement result information; or
indication information of a triggered event.

In the above embodiments, the cell information is cell information of a serving cell and/or cell information of a candidate cell, and may be indicated via a bitmap and/or a cell index.

In the above embodiments, that a bit value corresponding to the serving cell or a candidate configuration in the bitmap is set to 1 indicates that an L1 measurement result of a corresponding cell is included in the MAC CE.

In the above embodiments, the MAC CE may further include a serving cell index or a candidate configuration ID or PCI information corresponding to the cell.

In the above embodiments, the cell type information indicates whether the cell information is cell information of a serving cell or cell information of a candidate cell.

In the above embodiments, the reference signal information may include at least one of the following:
an SSB index, a CSI-RS resource ID, or an RS index.

In the above embodiments, the measurement result information may include at least one of the following:
L1 RSRP, or L1 SINR.

In the above embodiments, the indication information of a triggered event may include at least one of the following:
an event ID, or an event index.

In the above embodiments, the MAC CE may be a normal MAC CE, i.e., truncation is not supported, or the MAC CE may further be a truncated MAC CE, and the truncated MAC CE includes an L1 measurement result of an optimal candidate cell.

In the above embodiments, a logical channel priority of the MAC CE may be at least one of the following:
a priority same as a priority of an enhanced BFR MAC CE;
a priority lower or higher than an enhanced BFR MAC CE;
a priority higher or lower than a priority of an LBT failure; or
a priority higher or lower than a priority of a MAC CE for sidelink configured grant confirmation.

In the above embodiments, that the processing unit 920 performs L1 measurement reporting may further include that:
the processing unit 920 triggers a Scheduling Request (SR), wherein the SR uses a dedicated SR configuration for L1 measurement or uses a first SR configuration.

In the above embodiments, the first SR configuration may be at least one of the following:
an SR configuration for BSR reporting;
an SR configuration for BFR reporting; or
an SR configuration for LBT failure reporting.

In some embodiments, the processing unit 920 may cancel the L1 measurement reporting in a case where at least one of the following conditions is satisfied:
a count value and/or a timer value or a reference signal of a candidate cell or a serving cell that meets the first condition is reconfigured;
a MAC CE including L1 measurement reporting has been generated or successfully transmitted; or
a MAC PDU where the MAC CE including L1 measurement reporting is located has been assembled or successfully transmitted.

In some embodiments, the processing unit 920 may evaluate whether the first condition is satisfied or whether to perform at least one of the above processing, i.e., start evaluation, in a case where at least one of the following conditions is satisfied:
RRC signaling is received;
RRC signaling is received, and when the RRC signaling configures or reconfigures the first condition, or when the RRC signaling enables or allows evaluation of the first condition;
when handover is completed;
when a serving cell becomes worse;
when an indication for indicating start of evaluation, from a network device, is received;
after downlink has been synchronized; or
after downlink and/or uplink has/have been synchronized.

In some embodiments, the processing unit 920 may stop evaluating whether the first condition is satisfied or whether to perform at least one of the above processing, i.e., stop evaluation, in a case where at least one of the following conditions is satisfied:
RRC signaling is received;
RRC signaling is received, and when the RRC signaling releases or deactivates or disallows or prohibits the first condition;
when handover is completed;
when a serving cell becomes better;
when a failure is detected;
when failure recovery is initiated; or
after uplink has been synchronized.

According to the apparatus in the above embodiments, in a case where a condition (the first condition) based on L1 measurement or L3 measurement is satisfied, the terminal equipment performs at least one of L1 measurement reporting, early uplink synchronization on a candidate cell, or LTM execution to a target cell, thereby autonomous action is achieved, and signaling overhead is saved.

Embodiments of the present further disclosure provide a configuration apparatus. The apparatus may be e.g. a network device, or may be one or more components or assemblies configured in the network device. A principle by which the apparatus solves problems is same as the method shown in FIG. 8 in embodiments of the first aspect, thus a specific implementation thereof may refer to implementation of the method shown in FIG. 8 in embodiments of the first aspect, and the same contents are not repeated.

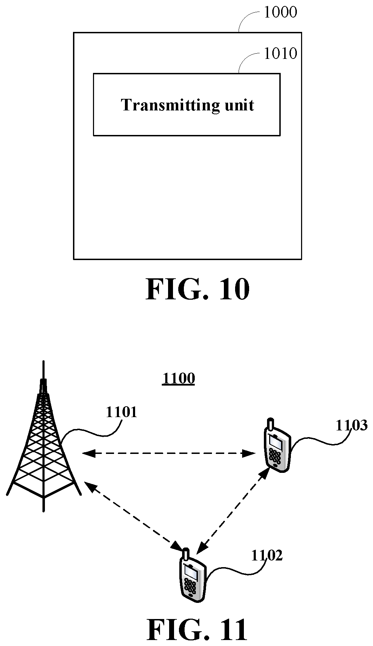

FIG. 10 is a schematic diagram of the configuring apparatus in embodiments of the present disclosure. As shown in FIG. 10, the apparatus 1000 includes:
a transmitting unit 1010 configured to transmit a first configuration to a terminal equipment, the first configuration being related to a first condition based on L1 measurement or L3 measurement; the terminal equipment performs at least one of the following processes in a case where the first condition is satisfied: L1 measurement reporting, early uplink synchronization on a candidate cell, or LTM execution to a target cell.

In some embodiments, the first configuration is transmitted via RRC signaling, and the first condition based on L1 measurement is included in the first configuration.

In some embodiments, the first configuration is transmitted via RRC signaling, and the first condition based on L3 measurement is included in the first configuration.

In some embodiments, the first configuration is transmitted via RRC signaling, and a count value and/or a timer value for the first condition is/are included in the first configuration.

In the above embodiments, the first configuration may further include indication information to indicate whether the count value and/or the timer value is/are allowed or enabled.

In some embodiments, the network device may further perform at least one of the following processes:
receiving L1 measurement reporting (corresponding to L1 measurement reporting of a UE side) transmitted by the terminal equipment;
receiving a preamble (corresponding to early uplink synchronization on a candidate cell) transmitted by the terminal equipment; or
receiving a first UL transmission (corresponding to LTM execution to a target cell) transmitted by the terminal equipment.

The above processing correspond to behaviors of a UE side.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The above apparatuses may further include other components or modules. For detailed contents of these components or modules, relevant technologies may be referred to. Moreover, each of the above components or modules may be implemented via a hardware facility such as a processor, a memory, a transmitter, a receiver, etc. Embodiments of the present disclosure have no limitation thereto.

According to an apparatus in the above embodiments, the network device transmits a configuration related to the first condition based on L1 measurement or L3 measurement to the terminal equipment, so as to control the terminal equipment to perform at least one of L1 measurement reporting, early uplink synchronization on a candidate cell, or LTM execution to a target cell in a case where the condition (the first condition) based on L1 measurement or L3 measurement is satisfied, thereby autonomous action controlled by the network is achieved, signaling overhead is saved and meanwhile, an inappropriate terminal autonomous behavior is avoided.

### Embodiments of a Third Aspect

Embodiments of the present disclosure further provide a communication system, including a network device and a terminal equipment.

FIG. 11 is a schematic diagram of the communication system in embodiments of the present disclosure, schematically describing a situation by taking a terminal equipment and a network device as an example, and as shown in FIG. 11, the communication system 1100 may include a network device 1101 and terminal equipments 1102, 1103. For simplicity, FIG. 11 only takes two terminal equipments and one network device as an example for description, however embodiments of the present disclosure are not limited thereto.

In embodiments of the present disclosure, transmission of existing services or future implementable services may be performed between the network device 1101 and the terminal equipments 1102, 1103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 11 shows that two terminal equipments 1102 and 1103 are all within a coverage range of the network device 1101, however the present disclosure is not limited thereto. Two terminal equipments 1102 and 1103 may be not within a coverage range of the network device 1101, or one terminal equipment 1102 is within the coverage range of the network device 1101 while the other terminal equipment 1103 is outside the coverage range of the network device 1101.

In some embodiments, the terminal equipment includes the apparatus 900 described in embodiments of the second aspect, configured to perform the method described in FIG. 6 in embodiments of the first aspect. Since the method has been described in details in embodiments of the first aspect, contents thereof are incorporated here and are not repeated.

In some embodiments, the network device includes the apparatus 1000 in embodiments of the second aspect, configured to perform the method in FIG. 8 in embodiments of the first aspect. Since the method has been described in details in embodiments of the first aspect, contents thereof are incorporated here and are not repeated.

Embodiments of the present disclosure further provide a terminal equipment, the terminal equipment for example may be a UE, however the present disclosure is not limited thereto, the terminal equipment may further be other terminal equipment.

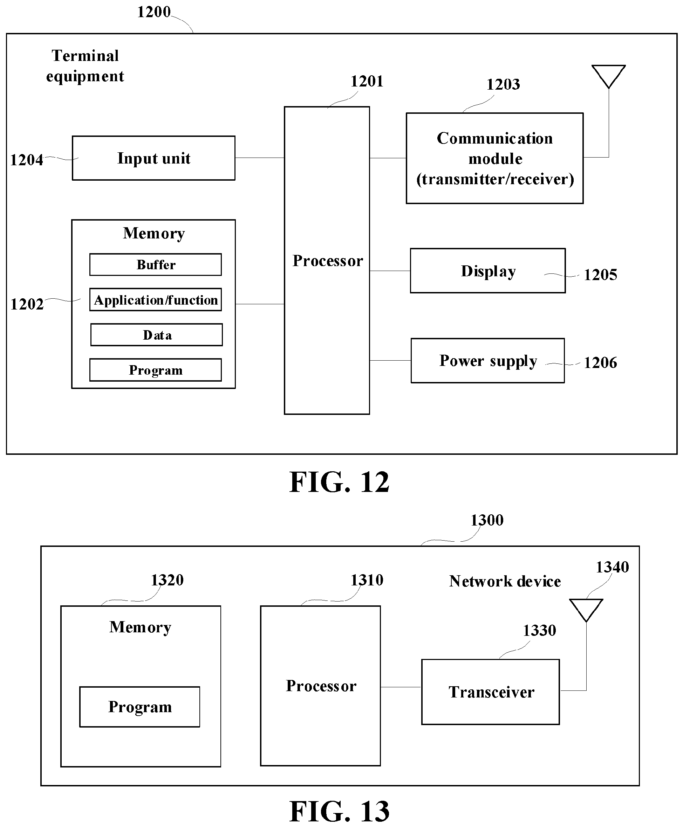

FIG. 12 is a schematic diagram of the terminal equipment in embodiments of the present disclosure. As shown in FIG. 12, the terminal equipment 1200 may include a processor 1201 and a memory 1202; the memory 1202 stores data and programs, and is coupled to the processor 1201. It is worth noting that this figure is exemplary, other types of structures may also be used to supplement or replace this structure, so as to implement a telecommunication function or other functions.

In some embodiments, functions of the apparatus 900 in embodiments of the second aspect may be integrated into the processor 1201, wherein the processor 1201 may be configured to execute a program to implement the method described in FIG. 6 in embodiments of the first aspect, contents thereof are incorporated here and are not described repeatedly here.

In some other embodiments, the apparatus 900 in embodiments of the second aspect may be configured separately from the processor 1201, for example the apparatus 900 in embodiments of the second aspect may be configured as a chip connected to the processor 1201, functions of the apparatus 900 in embodiments of the second aspect are implemented through control of the processor 1201.

As shown in FIG. 12, the terminal equipment 1200 may further include: a communication module 1203, an input unit 1204, a display 1205, and a power supply 1206. Functions of the above components are similar to related arts, and are not further elaborated here. It is worth noting that the terminal equipment 1200 does not have to include all components shown in FIG. 12, the above components are not indispensable. Moreover, the terminal equipment 1200 may further include components not shown in FIG. 12, and relevant technologies may be referred to.

Embodiments of the present disclosure further provide a network device, for example the network device may be a gNB, however the present disclosure is not limited thereto, the network device may further be other network device.

FIG. 13 is a schematic diagram of the network device in embodiments of the present disclosure. As shown in FIG. 13, a network device 1300 may include: a central processing unit (CPU) 1310 and a memory 1320, the memory 1320 being coupled to the central processing unit 1310. The memory 1320 may store various data; moreover, further stores a program for information processing, and executes the program under the control of the central processor 1310, so as to receive various information transmitted by a terminal equipment and transmit various information to a terminal equipment.

For example, the processor 1310 may be configured to execute a program to implement the method as described in FIG. 8 in embodiments of the first aspect.

In addition, as shown in FIG. 13, the network device 1300 may further include a transceiver 1330 and an antenna 1340, etc., wherein functions of said components are similar to related arts and are not further elaborated here. It is worth noting that the network device 1300 does not have to include all components shown in FIG. 13. Moreover, the network device 1300 may further include components not shown in FIG. 13, related arts may be referred to.

Embodiments of the present disclosure further provide a computer program, wherein when the program is executed in a terminal equipment, the program enables the terminal equipment to execute the method described in FIG. 6 in embodiments of the first aspect.

Embodiments of the present disclosure further provide a storage medium in which a computer program is stored, wherein the computer program enables a terminal equipment to execute the method described in FIG. 6 in embodiments of the first aspect.

Embodiments of the present disclosure further provide a computer program, wherein when the program is executed in a network device, the program enables the network device to execute the method described in FIG. 8 in embodiments of the first aspect.

Embodiments of the present disclosure further provide a storage medium in which a computer program is stored, wherein the computer program enables a network device to execute the method described in FIG. 8 in embodiments of the first aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to spirits and principles of the present disclosure, these variations and amendments are also within scopes of the present disclosure.

As for implementations including the above embodiments, the following supplements are further disclosed:
1. A method for autonomous action based on terminal evaluation, wherein the method includes that:
   a terminal equipment receives a first configuration transmitted by a network device, the first configuration being related to a first condition based on L1 measurement or based on L3 measurement; and
   the terminal equipment performs at least one of the following processes in a case where the first condition is satisfied: L1 measurement reporting, early uplink synchronization on a candidate cell, or LTM execution to a target cell.
2. The method according to supplement 1, wherein,
   the first configuration is transmitted via RRC signaling, and a count value and/or a timer value for the first condition is/are included in the first configuration,
   the method further includes that:
      a MAC layer of the terminal equipment evaluates whether the first condition is satisfied based on an indication related to L1 measurement provided by a physical layer of the terminal equipment and/or the first configuration.
3. The method according to supplement 2, wherein the first condition is that a first time has passed since last L1 measurement reporting is performed, and the terminal equipment performs a first behavior, which includes that:
   the terminal equipment performs at least one of the following processes: L1 measurement reporting, or early uplink synchronization on a candidate cell.
4. The method according to supplement 3, wherein the first condition is that a first time has passed since last early uplink synchronization on a candidate cell is performed, and the terminal equipment performs a first behavior, which includes that:
   the terminal equipment performs early uplink synchronization on a candidate cell.
5. The method according to supplement 3 or 4, wherein,
   if the terminal equipment performs early uplink synchronization on a candidate cell, the first time is determined according to a TA timer.
6. The method according to Supplement 1, wherein that the terminal equipment performs L1 measurement reporting includes that:
   the terminal equipment generates a MAC CE, and performs the L1 measurement reporting via the MAC CE;
   the MAC CE includes at least one of the following:
      cell information;
      cell type information;
      reference signal information;
      measurement result information; or
      indication information of a triggered event;
      wherein,
      the cell information is indicated by a bitmap and/or a cell index, that a bit value corresponding to a serving cell or a candidate configuration in the bitmap is set to 1 indicates that an L1 measurement result of the cell is included in the MAC CE;
      the reference signal information includes at least one of the following: an SSB index, a CSI-RS resource ID, or an RS index;
      the measurement result information includes at least one of the following: L1 RSRP, or L1 SINR; and
      the indication information of the triggered event includes at least one of an event ID, and an event index.
7. The method according to supplement 6, wherein,
   the MAC CE is a normal MAC CE; or,
   the MAC CE is a truncated MAC CE, and the truncated MAC CE includes an L1 measurement result of an optimal candidate cell.
8. The method according to Supplement 6, wherein a logical channel priority of the MAC CE is at least one of the following:
   a priority same as a priority of an enhanced BFR MAC CE;
   a priority lower or higher than an enhanced BFR MAC CE;
   a priority higher or lower than a priority of an LBT failure; or
   a priority higher or lower than a priority of a MAC CE for sidelink configured grant confirmation.
9. The method according to any one of supplements 1 to 8, wherein that the terminal equipment performs L1 measurement reporting includes that:
   the terminal equipment triggers a Scheduling Request (SR), wherein the SR uses a dedicated SR configuration for L1 measurement or uses a first SR configuration,
   wherein the first SR configuration is at least one of the following:
      an SR configuration for BSR reporting;
      an SR configuration for BFR reporting; or
      an SR configuration for LBT failure reporting.
10. The method according to any one of supplements 1 to 8, wherein the method further includes that:
   the terminal equipment cancels the L1 measurement reporting in a case where at least one of the following conditions is satisfied:
   a count value and/or a timer value or a reference signal of a candidate cell or a serving cell that meets the first condition is reconfigured;
   a MAC CE including the L1 measurement reporting has been generated or successfully transmitted; or
   a MAC PDU where the MAC CE including the L1 measurement reporting is located has been assembled or successfully transmitted.

## Claims

1. An apparatus for autonomous action based on terminal evaluation, configured in a terminal equipment, wherein the apparatus comprises:
a receiving unit configured to receive a first configuration transmitted by a network device, the first configuration being related to a first condition based on L1 measurement or L3 measurement; and
a processing unit configured to perform at least one of the following processes in a case where the first condition is satisfied: L1 measurement reporting, early uplink synchronization on a candidate cell, or L1 or L2 triggered mobility (LTM) execution to a target cell.

2. The apparatus according to claim 1, wherein,
the first configuration is transmitted via Radio Resource Control (RRC) signaling, and the first condition based on L1 measurement is comprised in the first configuration.

3. The apparatus according to claim 2, wherein,
the processing unit is further configured to evaluate whether the first condition is satisfied via a physical layer of the terminal equipment, and provide an indication of whether the first condition is satisfied and/or information related to the first condition to a Media Access Control (MAC) layer of the terminal equipment; or,
the processing unit is further configured to evaluate whether the first condition is satisfied via a MAC layer of the terminal equipment based on an indication or information related to L1 measurement provided by the physical layer.

4. The apparatus according to claim 1, wherein,
the first configuration is transmitted via RRC signaling, and the first condition based on L3 measurement is comprised in the first configuration.

5. The apparatus according to claim 4, wherein,
the processing unit is further configured to evaluate whether the first condition is satisfied via an RRC layer of the terminal equipment, and provide an indication of whether the first condition is satisfied and/or information related to the first condition to a MAC layer of the terminal equipment; or,
the processing unit is further configured to evaluate whether the first condition is satisfied via a MAC layer of the terminal equipment based on an indication or information related to L3 measurement provided by an RRC layer.

6. The apparatus according to claim 1, wherein,
the first configuration is transmitted via RRC signaling, and a count value and/or a timer value for the first condition is/are comprised in the first configuration.

7. The apparatus according to claim 6, wherein,
the first configuration comprises indication information, the indication information being used to indicate whether the count value and/or the timer value is/are allowed or enabled.

8. The apparatus according to claim 6, wherein the first condition comprises at least one of the following:
a serving cell becomes better than a first value;
a serving cell becomes worse than a second value;
a candidate cell becomes better than a third value;
a serving cell or a special cell becomes worse than a fourth value, and a candidate cell becomes better than a fifth value;
a candidate cell becomes better than a serving cell or a special cell;
a first time has passed since last L1 measurement reporting or early uplink synchronization on a candidate cell is performed; or
a serving cell becomes worse.

9. The apparatus according to claim 8, wherein that the serving cell becomes better than the first value comprises at least one of the following:
the number of first indications of the serving cell received from the physical layer reaches a value n1;
during t1, the number of first indications of the serving cell received from the physical layer reaches a value n1; or
the number of consecutive first indications of the serving cell received from the physical layer reaches a value n1.

10. The apparatus according to claim 8, wherein that the serving cell becomes worse than the second value comprises at least one of the following:
the number of second indications of the serving cell received from the physical layer reaches a value n2;
during t1, the number of second indications of the serving cell received from the physical layer reaches a value n2; or
the number of consecutive second indications of the serving cell received from the physical layer reaches a value n2.

11. The apparatus according to claim 8, wherein that the candidate cell becomes better than the third value comprises at least one of the following:
the number of third indications of the candidate cell received from the physical layer reaches a value n3;
during t1, the number of third indications of the candidate cell received from the physical layer reaches a value n3; or
the number of consecutive third indications of the candidate cell received from the physical layer reaches a value n3.

12. The apparatus according to claim 8, wherein that the serving cell or the special cell becomes worse than the fourth value, and the candidate cell becomes better than the fifth value comprises at least one of the following:
the number of fifth indications of the candidate cell received from the physical layer reaches a value n1, and the number of fourth indications of the serving cell or the special cell received from the physical layer reaches a value n2;
during t1, the number of fifth indications of the candidate cell received from the physical layer reaches a value n1, and the number of fourth indications of the serving cell or the special cell received from the physical layer reaches a value n2; or
the number of consecutive fifth indications of the candidate cell received from the physical layer reaches a value n1, and the number of consecutive fourth indications of the serving cell or the special cell received from the physical layer reaches a value n2.

13. The apparatus according to claim 8, wherein that the candidate cell becomes better than the serving cell or the special cell comprises at least one of the following:
the number of sixth indications of the candidate cell received from the physical layer reaches a value n3;
during t1, the number of sixth indications of the candidate cell received from the physical layer reaches a value n3; or
the number of consecutive sixth indications of the candidate cell received from the physical layer reaches a value n3.

14. The apparatus according to claim 8, wherein that the serving cell becomes worse comprises at least one of the following:
during t1, the number of consecutive uplink Negative Acknowledgements (NACKs) reaches a value n4;
during t1, the number of consecutive unsuccessful transmissions reaches a value n4; or
during t1, the number of Configured Grant (CG) transmission timeouts reaches a value n4.

15. The apparatus according to claim 1, wherein that the processing unit performs L1 measurement reporting comprises that:
the processing unit generates a MAC Control Element (MAC CE), and performs the L1 measurement reporting via the MAC CE.

16. The apparatus according to claim 15, wherein the MAC CE comprises at least one of the following:
cell information;
cell type information;
reference signal information;
measurement result information; or
indication information of a triggered event.

17. The apparatus according to claim 16, wherein,
the MAC CE comprises a serving cell index or a candidate configuration identifier (ID) or Physical Cell Identity (PCI) information corresponding to the cell.

18. The apparatus according to claim 16, wherein,
the cell type information is used to indicate whether the cell information is cell information of a serving cell or cell information of a candidate cell.

19. The apparatus according to claim 1, wherein the processing unit evaluates whether the first condition is satisfied or whether to perform at least one of the above processes in a case where at least one of the following conditions is satisfied:
RRC signaling is received;
RRC signaling is received, and when the RRC signaling configures or reconfigures the first condition, or when the RRC signaling enables or allows evaluation of the first condition;
when handover is completed;
when a serving cell becomes worse;
when an indication for indicating start of evaluation, from a network device, is received;
after downlink has been synchronized; or
after downlink and/or uplink has/have been synchronized.

20. The apparatus according to claim 1, wherein the processing unit stops evaluating whether the first condition is satisfied or whether to perform at least one of the above processes in a case where at least one of the following conditions is satisfied:
RRC signaling is received;
RRC signaling is received, and when the RRC signaling releases or deactivates or disallows or prohibits the first condition;
when handover is completed;
when a serving cell becomes better;
when a failure is detected;
when failure recovery is initiated; or
after uplink has been synchronized.
